# EUROPEAN PATENT SPECIFICATION

(11) **EP 4 524 449 B1**
(45) Date of publication and mention of the grant of the patent: **09.09.2026**
(21) Application number: 22942823.0
(22) Date of filing: 30.05.2022
(51) Int. Cl.: F16M 11/22, F16M 11/08, F16M 11/18

(54) **DISPLAY DEVICE**
ANZEIGEVORRICHTUNG
DISPOSITIF D'AFFICHAGE

(30) Priority: 20.05.2022 KR 20220062194
(43) Date of publication of application: 19.03.2025
(73) Proprietor: LG Electronics Inc., Yeongdeungpo-gu Seoul 07336 (KR)
(72) Inventor: CHA, Taesung, Seoul 06772 (KR); YOON, Jihoon, Seoul 06772 (KR); LEE, Juhun, Seoul 06772 (KR); KWON, Hyeongjun, Seoul 06772 (KR); HAN, Dongkyoon, Seoul 06772 (KR); KIM, Younghoon, Seoul 06772 (KR)
(74) Representative: Schornack, Oliver
(86) International application number: PCT/KR2022/007639
(87) International publication number: WO 2023/224159

(56) References cited:
- CN-A- 110 630 879
- JP-A- 2010 276 727
- KR-A- 20200 004 567
- KR-B1- 100 874 391
- KR-Y1- 200 476 266
- US-B1- 6 244 553
- ANONYMOUS: "LG Electronics Inc. OLED77G2KNA", NAVER CORP., 1 March 2022 (2022-03-01), XP093108156, Retrieved from the Internet <URL:https://search.shopping.naver.com/catalog/31403215618?cat_id=50002115&frm=NVSCMOD&query=oled77g2kna&NaPm=ct%3Dldwfwm6o%7Cci3D7fe0d4d0cd917521ad8048d861e9c910c4a4a0de%7Ctr%3Dsls%7Csn%3D95694%7Chk3Df2b761050b570c4c0bf792e63c70389913333cb2> [retrieved on 20231203]

## Description

### TECHNICAL FIELD

The present invention relates to a display device.

### BACKGROUND ART

A swivel unit in which the display body is coupled to a base so as to be swivelable relative to an installation surface is disclosed in Korean Patent Publication No. 10-0609852 B1 (published on August 8, 2006), and the swivel unit is provided on a lower area of the base to enable the display body to be swiveled about a vertical axis relative to the base with respect to the display device, and also, the swivel unit includes a swivel member coupled to a bottom surface of the base by a screw or the like, and a swivel support having one side supported on the installation surface and the other side slidably provided between the swivel member and the base so that the swivel member is supported to be swiveled.

The swivel support has a lower support portion seated on the installation surface such as a table and an upper support portion provided at an upper side of the lower support portion to extend to be inserted between the swivel member and a lower base cover, and a contact pad that prevents noise and slipping from occurring when being in contact with the installation surface is provided on a bottom surface of the lower support portion.

When a user presses the display body or the base to rotate around a vertical axis line, the swivel member coupled to the base is swiveled around the vertical axis line with respect to the swivel support seated on the installation surface.

Furthermore, US 6,244,553 B1 relates to a fastening device for electronic equipment comprising a base, a pivotable member secured to the base in the bottom, and a connecting member pivotably secured to one side on the top of the pivotable member. A pivot direction of the connecting member is perpendicular to that of the pivotable member.

### DISCLOSURE OF THE INVENTION

### TECHNICAL PROBLEM

An object of the present invention is to provide a display device in which an entire display set including a display body and a stand are swiveled.

Another object of the present invention is to provide a display device capable of returning to its original position when a display set is lifted in a state in which an entire display set is swiveled.

### TECHNICAL SOLUTION

This object is solved by the present invention as defined in the independent claim. Preferred embodiments are derivable from the dependent claims.

In accordance with an exemplary aspect to better understand the present disclosure, but not entirely reflecting the claimed invention, a display device may include a display set and a swivelling mechanism connected to the display set, wherein the display set includes a display body and a stand connected to the display body, and wherein the swiveling mechanism includes: a swivel top plate coupled to the stand; a swivel top bracket disposed below the swivel top plate and having a first gear; a swivel bottom bracket having a second gear with which the first gear is detachably engaged; a swivel bottom plate coupled to the swivel bottom bracket; an elastic member provided at a bottom surface of the swivel bottom plate and placed on an installation surface; a stopper plate disposed on the bottom surface of the swivel bottom plate; a bolt passing through the swivel top plate, the swivel top bracket, and the stopper plate; a nut coupled to the bolt; and a spring supported by the swivel bottom plate and elastically deformed by the stopper plate.

The first gear may be disposed on a bottom surface of the swivel top bracket, and the second gear may be disposed on a top surface of the swivel bottom bracket.

A bolt through-hole through which the bolt passes may be defined in each of the swivel top plate, the swivel top bracket, and the stopper plate.

An accommodation portion in which the stopper plate is accommodated may be provided in the swivel bottom plate.

A space in which the accommodation portion is accommodated may be defined between the swivel top bracket and the stopper plate.

In the swivel bottom bracket, an opening that surrounds the accommodation portion may be defined larger than the accommodation portion.

A spring space in which the spring is accommodated may be defined between the swivel top bracket and the swivel bottom plate.

The spring includes: a spring body; a first bent portion bent at one side of the spring body; and a second bent portion bent at the other side of the spring body.

A first latch that is in contact with the first bent portion and the second bent portion is provided on the swivel bottom plate.

A second latch that is in contact with one of the first bent portion and the second bent portion is provided on the stopper plate.

The second latch may be disposed to face the first latch in a horizontal direction.

An accommodation groove in which an upper end of the first latch and an upper end of the second latch are accommodated may be defined in a bottom surface of the swivel top bracket.

A swivel bottom plate accommodation portion into which the swivel bottom plate is inserted to be accommodated may be defined in the swivel bottom bracket.

A stopper portion may protrude from the swivel bottom plate, and a stopper groove hooked with the stopper portion when the swivel top plate excessively rotates may be defined in the swivel top plate.

A stopper portion through-hole through which the stopper portion passes may be defined in the swivel bottom bracket.

### ADVANTAGEOUS EFFECTS

According to the embodiment of the present invention, the entire swivel set may be swiveled, and when being swiveled frequently, only the swiveling mechanism may be replaced or repaired without repairing or replacing the display set, and there may be the advantage in that the repair or replacement operation is easier than when the display set is repaired or replaced.

In addition, the first and second gears may restrict the rapid swivel of the display set and allow the display set to be swiveled smoothly.

In addition, when the display set is lifted in the state in which the entire display set is swiveled, it may return to its original positionby the spring.

In addition, the stopper plate may be accommodated in the accommodation portion provided in the swivel bottom plate to minimize the vertical thickness of the swiveling mechanism, and the stopper plate may be protected by the swivel bottom plate.

In addition, the opening defined in the swivel bottom bracket may surround the accommodation portion to minimize the vertical thickness of the swiveling, thereby protecting the accommodation portion by the swivel bottom bracket.

In addition, the simple structure of the stopper portion and the stopper groove may prevent the excessive rotation of the display set.

### BRIEF DESCRIPTION OF THE DRAWINGS

FIG. 1 is a front view of a display device according to this embodiment,
FIG. 2 is a plan view of the display device according to this embodiment,
FIG. 3 is a bottom view of the display device according to this embodiment,
FIG. 4 is a perspective view of a swiveling mechanism according to this embodiment,
FIG. 5 is an exploded perspective view of the swiveling mechanism according to this embodiment,
FIG. 6 is a bottom view of the swiveling mechanism according to this embodiment,
FIG. 7 is a plan view of the swiveling mechanism according to this embodiment,
FIG. 8 is a cross-sectional view taken along line A-A of FIG. 4,
FIG. 9 is a cross-sectional view when the swiveling mechanism is lift upward according to this embodiment,
FIG. 10 is a plan view of a spring according to this embodiment,
FIG. 11 is a bottom view before the swiveling mechanism is swiveled according to this embodiment, and
FIG. 12 is a bottom view while the swiveling mechanism is swiveled according to this embodiment.

### MODE FOR CARRYING OUT THE INVENTION

Hereinafter, detailed embodiments will be described in detail with reference to the accompanying drawings.

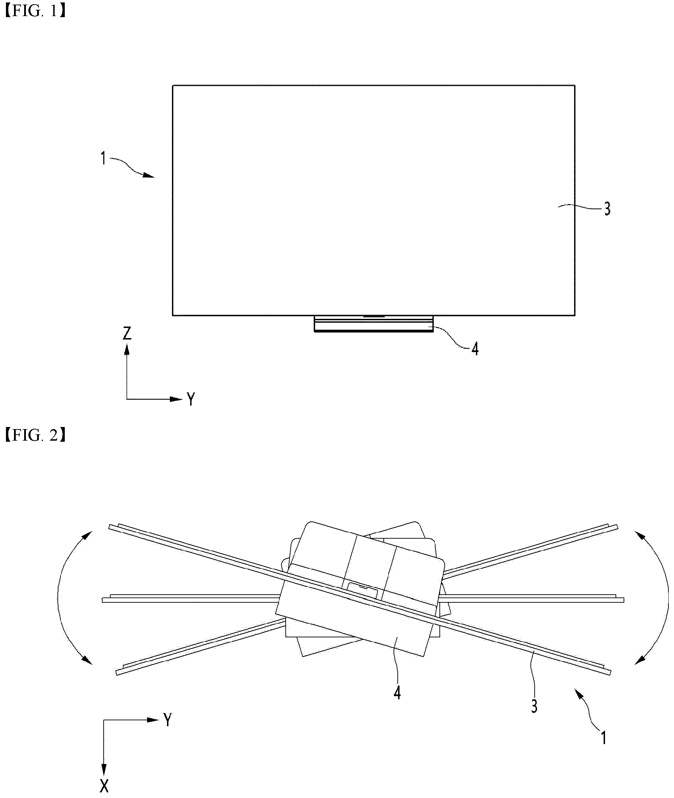

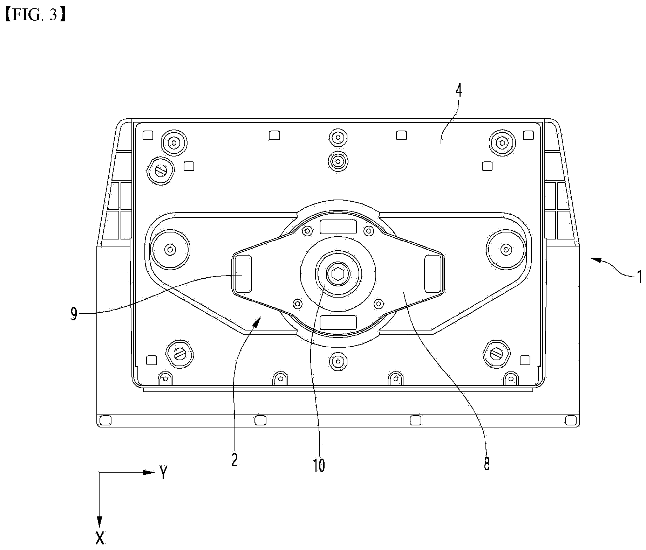

FIG. 1 is a front view of a display device according to this embodiment, FIG. 2 is a plan view of the display device according to this embodiment, and FIG. 3 is a bottom view of the display device according to this embodiment.

A display device may include a display set 1 and a swiveling mechanism 2 (see FIG. 3).

The display set 1 may include a display body 3 and a stand 4 connected to the display body 3. The display set 1 may be placed on the swiveling mechanism 2 and be swiveled in a clockwise or counterclockwise direction around the swiveling mechanism 2, as shown in FIG. 2.

The display body 3 may have a roughly rectangular display surface. Examples of the display body 3 may be a display panel such as an LCD, an LED, or a PDP.

The stand 4 may be connected to a rear surface of the display panel. A lower portion of the stand 4 may be exposed through a lower end of the display panel.

The swiveling mechanism 2 may be connected to the display set 1.

The swiveling mechanism 2 may be connected to the stand 4 and be connected to the stand 4 so as to be disposed at a lower side of the stand 4. The swiveling mechanism 2 may be smaller than the stand 4 and may be covered by the stand 4 when viewed from the above by a user or operator.

The swiveling mechanism 2 may be placed on an installation surface, and an example of the installation surface may be a top surface of a table or the like on which the display device is placed. When the swiveling mechanism 2 is placed on the installation surface, a load of the display set 1 may be transferred to the swiveling mechanism 2.

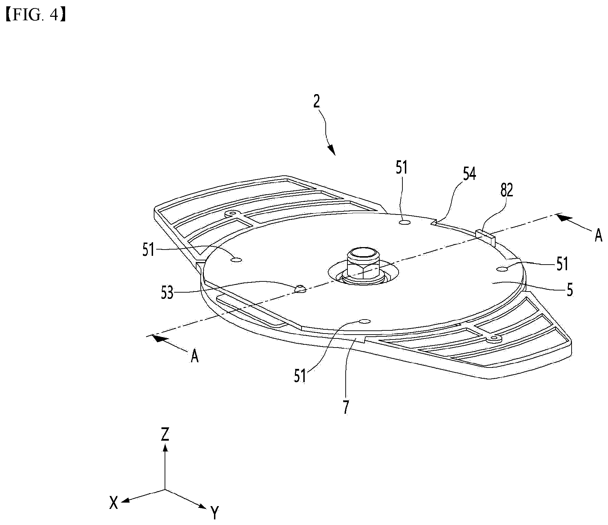

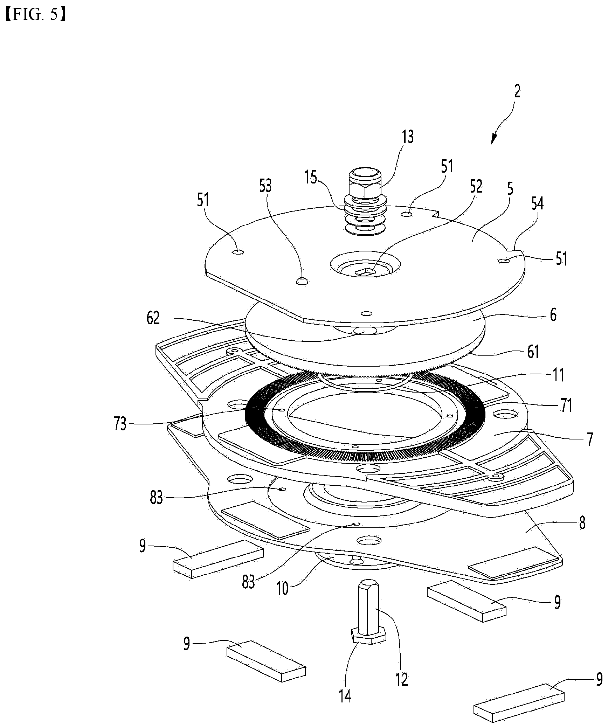

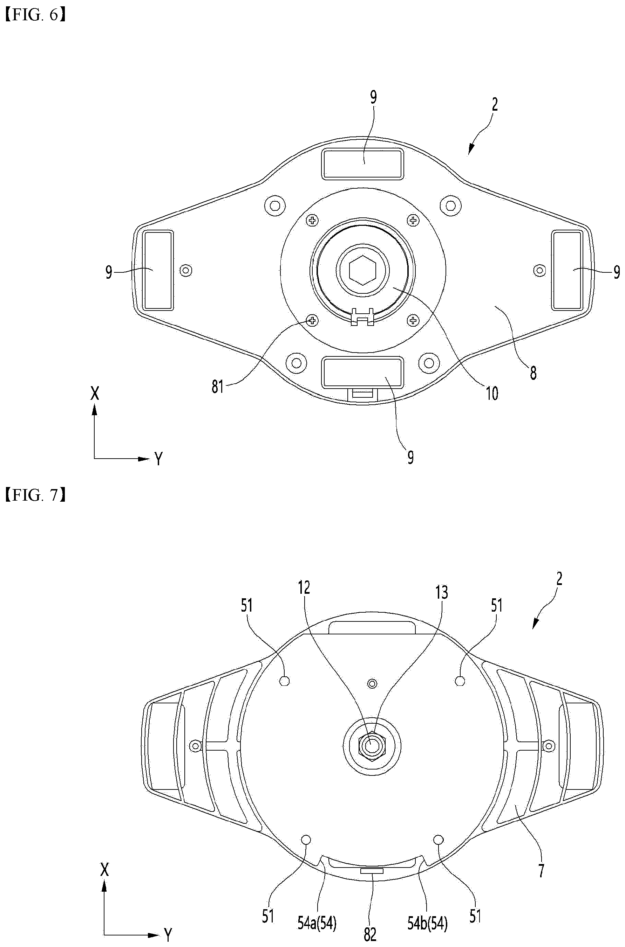

FIG. 4 is a perspective view of the swiveling mechanism according to this embodiment, FIG. 5 is an exploded perspective view of the swiveling mechanism according to this embodiment, FIG. 6 is a bottom view of the swiveling mechanism according to this embodiment, and FIG. 7 is a plan view of the swiveling mechanism according to this embodiment.

The swiveling mechanism 2 includes a swivel top plate 5, a swivel top bracket 6, a swivel bottom bracket 7, a swivel bottom plate 8, an elastic member 9, a stopper plate 10, and a spring 11.

The swivel top plate 5 may be provided in a shape that is roughly similar to a circular plate. The swivel top plate 5 may define an outer appearance of a top surface appearance of the swiveling mechanism 2.

The swivel top plate 5 may be disposed below the stand 4. The swivel top plate 5 is coupled to the stand 4. The swivel top plate 5 may be coupled to the stand 4 using a coupling member (hereinafter, referred to as a coupling member) such as a screw. The swivel top plate 5 may be provided with at least one coupling hole 51 through which the coupling member passes. The coupling hole 51 may be defined to pass through the swivel top plate 5 in a vertical direction Z. The coupling hole 51 may be provided in plurality in the swivel top plate 5, and the plurality of coupling holes 5 may be defined to be spaced apart from each other.

An assembly guide 53 may be disposed on the swivel top plate 5. The assembly guide 53 may be provided to protrude at one side of a top surface of the swivel top plate 5. The mounting guide 53 may be inserted into a guide hole (not shown) defined in the stand 4, and the swivel top plate 5 may be coupled to the stand 4 as the coupling member while the assembly guide 53 is inserted into the guide hole.

A material of the swivel top plate 5 may be hot-rolled galvanized steel (HGI).

The swivel top bracket 6 is disposed below the swivel top plate 5. The swivel top bracket 6 may have a size less than that of the swivel top plate 5. The swivel top bracket 6 may be protected by the swivel top plate 5. The swivel top bracket 6 may be disposed between the swivel top plate 5 and the swivel bottom bracket 6.

A first gear 61 may be provided on the swivel top bracket 6. The first gear 61 may be disposed on a bottom surface of the swivel top bracket 6. An overall shape of the first gear 61 may be a ring shape.

A material of the swivel top bracket 6 may be polyacetal (POM).

The swivel bottom bracket 7 may be provided with a second gear 71. The second gear 71 may be disposed on the top surface of the swivel bottom bracket 7. The second gear 71 may be separably engaged with the first gear 61.

When the swivel top bracket 6 is lifted upward, the first gear 61 may be separated from the second gear 71, and when the swivel top bracket 6 is pressed downward, the first gear 61 may be engaged with the second gear 71.

The first gear 61 and the second gear 71 may be engaged by a load of the display set 1, and when the display set 1 is swiveled, friction torque may be generated between the first gear 61 and the second gear 71 to allow the display set 1, the swivel top plate 5, and the swivel top bracket 6 to be swiveled.

If no external force is applied to the display set 1, the first gear 61 and the second gear 71 may be maintained in the engaged state.

A material of the swivel bottom bracket 7 may be polyacetal (POM).

The swivel bottom plate 8 may be coupled to the swivel bottom bracket 7. The swivel bottom plate 8 may be coupled to the swivel bottom bracket 7 using the coupling member 81 (hereinafter, referred to as the coupling member 81 (see FIG. 6)) such as a screw.

A lower coupling hole 83 (see FIG. 5) may be defined in the swivel bottom plate 8, and an upper coupling hole 73 (see FIG. 5) corresponding to the lower coupling hole 83 may be defined in the swivel bottom bracket 7. The lower coupling hole 83 may be defined to pass through the swivel bottom plate 8 in the vertical direction, and the upper coupling hole 73 may be defined to pass through the swivel bottom bracket 7 in the vertical direction. The coupling member 81 may pass through the lower coupling hole 83 and the upper coupling hole 73 to couple the swivel bottom plate 8 to the swivel bottom bracket 7. The swivel bottom plate 8 and the swivel bottom bracket 7 may be integrated by the coupling member 81.

A material of the swivel bottom plate 8 may be hot-rolled galvanized steel (HGI).

An elastic member mounting part on which the elastic member 9 is mounted may be provided on the bottom surface of the swivel bottom plate 8.

The elastic member 9 is provided on the bottom surface of the swivel bottom plate 8 and may be placed on the installation surface.

The elastic member 9 may be attached to the swivel bottom plate 8 by an adhesive member such as a double-sided tape.

The elastic member 9 may be a contact pad that prevents noise and slipping when being in contact with the installation surface. A material of the elastic member 9 may be rubber.

The elastic member 9 may be provided in plurality in the bottom surface of the swivel bottom plate 8, and the plurality of elastic members 9 may be spaced apart from each other.

The user or operator may place the swiveling mechanism 2 on the installation surface in the state in which the swiveling mechanism 2 is coupled to the display set 1, and the elastic member 9 may restrict the swiveling mechanism 2 from slipping on the installation surface by exerting strong frictional force on the installation surface.

The stopper plate 10 is disposed on the bottom surface of the swivel bottom plate 8. A size of the stopper plate 10 may be less than that of the swivel bottom plate 8 and may be hidden by the swivel bottom plate 8.

A material of the stopper plate 10 may be hot-rolled galvanized steel (HGI).

The spring 11 is supported on the swivel bottom plate 8. The spring 11 is disposed between the swivel bottom plate 8 and the swivel top bracket 6 in the vertical direction Z.

When the stopper plate 10 rotates, the spring 11 may be elastically deformed by the stopper plate 10, and when the external force applied to the spring 11 is removed, the spring 11 may be elastically restored.

The swiveling mechanism 2 includes a bolt 12 and a nut 13 coupled to the bolt 12. The swiveling mechanism 2 may further include at least one washer 15.

The bolt 12 may pass through the swivel top plate 5, the swivel top bracket 6, and the stopper plate 10.

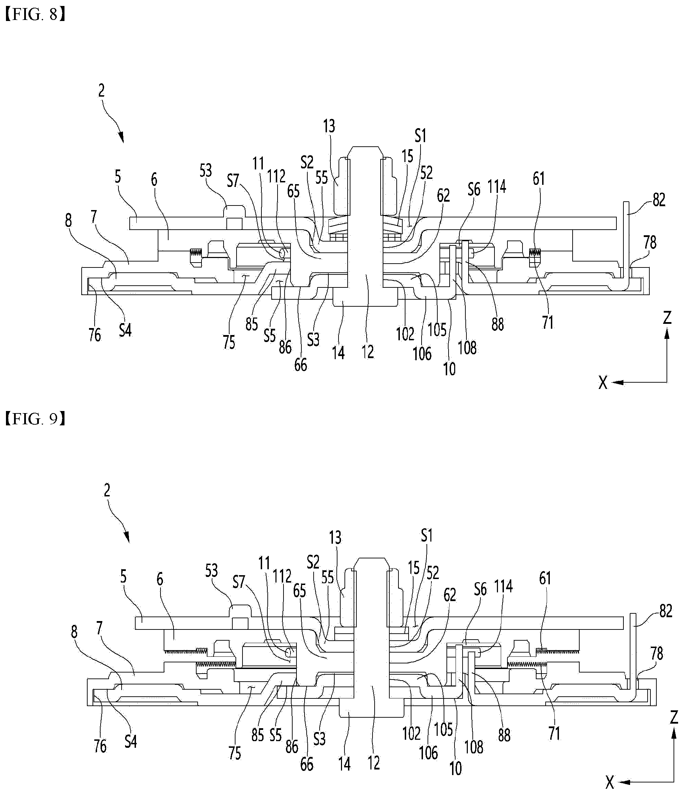

Bolt through-holes 52, 62, 102 (see FIG. 8) through which the bolts 12 pass may be defined in the swivel top plate 5, the swivel top bracket 6, and the stopper plate 10, respectively.

The bolt 12 may sequentially pass through the bolt through-hole 102 of the stopper plate 10, the bolt through-hole 62 of the swivel top bracket 6 and the bolt through-hole 52 of the swivel top plate 5, and the nut 13 may be coupled to a portion of the bolt 12, which is disposed above the bolt through-hole 52 of the swivel top plate 5.

The bolt 12 may function as a vertical central axis of the swiveling mechanism 2. The bolt 12 may have a bolt head 14 at a lower portion thereof. The bolt head 14 may be in contact with a peripheral portion of the bolt through-hole 102 of the stopper plate 10, and the stopper plate 10 may be hooked downward on the bolt head 14.

The nut 13 may be coupled to the bolt 12. The nut 13 may be coupled to an upper portion of the bolt 12. The swivel top plate 5, the swivel top bracket 6, and the stopper plate 10 may be restricted by the nut 12 and the bolt 12 between the nut 12 and the bolt head 14.

The swiveling mechanism 2 may include a stopper that prevents the display set 1 from rotating beyond a predetermined angle. The stopper may include a stopper groove 54 and a stopper portion 82, as illustrated in FIG. 4 and FIG. 7.

The stopper portion 82 may protrude from the swivel bottom plate 8, and the stopper groove 54 that is hooked with the stopper portion 82 when the swivel top plate 5 excessively rotates may be defined in the swivel top plate 5.

The stopper groove 54 may be provided in a recessed shape in a portion of an outer circumference of the swivel top plate 5. The stopper groove 54 may be defined in a rear portion of front and rear portions of the swivel top plate 5 and may be provided in an arc shape. One end 54a or the other end 54b of the stopper groove 54 may be hooked on the stopper portion 82. A distance between the one end 54a and the other end 54b of the stopper groove 54 may be greater than a length of the stopper portion 82, as shown in FIG. 7.

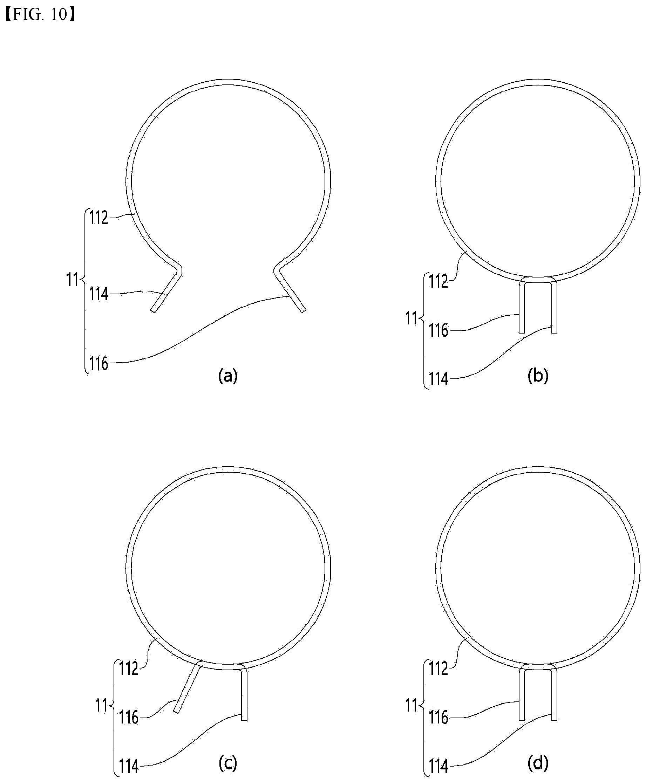

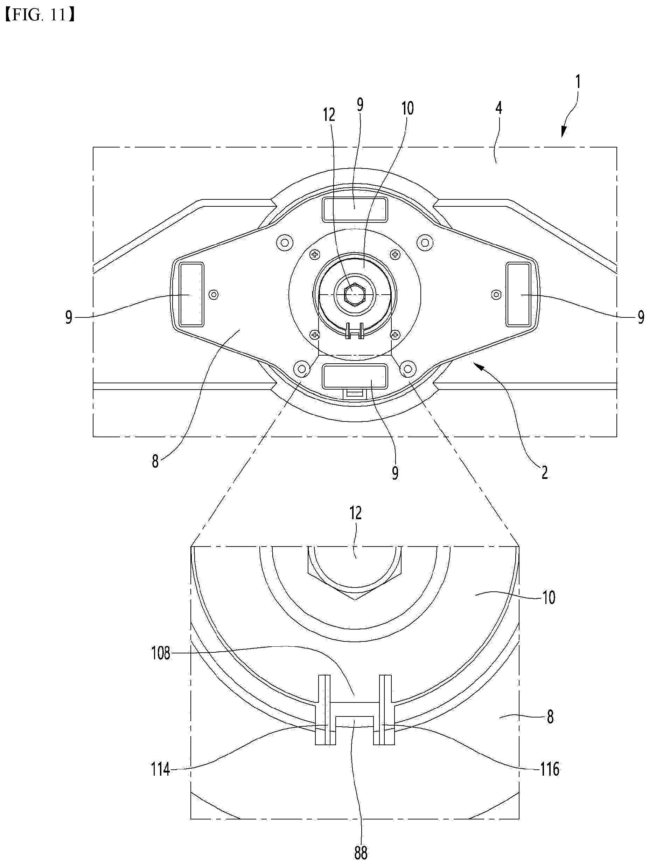

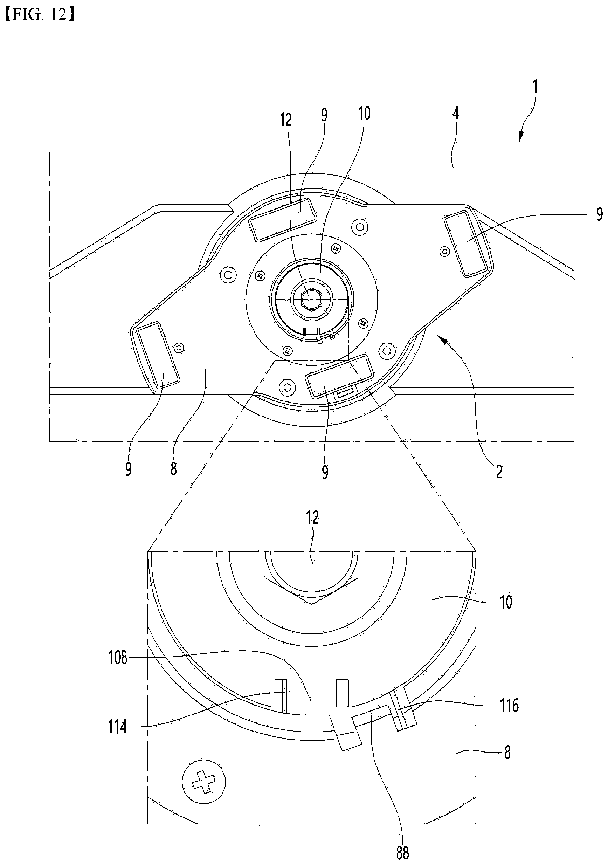

FIG. 8 is a cross-sectional view taken along line A-A of FIG. 4, FIG. 9 is a cross-sectional view when the swiveling mechanism is lift upward according to this embodiment, FIG. 10 is a plan view of the spring according to this embodiment, FIG. 11 is a bottom view before the swiveling mechanism is swiveled according to this embodiment, and FIG. 12 is a bottom view while the swiveling mechanism is swiveled according to this embodiment.

The swivel top plate 5 may be provided with an upper protrusion 55 that is bent to protrude downward.

The bolt through-hole 52 of the swivel top plate 5 may be defined to pass through the upper protrusion 55 in the vertical direction Z.

The upper protrusion 55 may be provided in a shape that is recessed downward in the top surface of the swivel top plate 5.

An upper accommodation groove S1 may be defined at an inner side of the upper protrusion 55, and a washer 15 may be accommodated in the upper accommodation groove S1. The washer 15 may be disposed between the upper protrusion 55 and the nut 13. The upper accommodation groove S1 may have an opened top surface. The upper accommodation groove S1 may be a washer accommodation groove in which the washer 15 is accommodated.

The upper protrusion 55 may be provided in a shape that protrudes downward on the bottom surface of the swivel top plate 5.

A coupling hole 51, which couples the swivel top plate 5 to the stand 4, and the assembly guide 53 may be provided other than the upper protrusion 55.

The swivel top bracket 6 may be provided with a lower protrusion 65 into which the upper protrusion 55 is inserted and accommodated. The lower protrusion 65 may be provided to be disposed below the upper protrusion 55. The lower protrusion 65 may have a shape that protrudes downward from the swivel top bracket 6.

The bolt through-hole 62 of the swivel top bracket 6 may be provided to pass through the lower protrusion 65 in the vertical direction Z.

The lower protrusion 65 may be provided in a recessed shape in the top surface of the swivel top bracket 6.

An upper protrusion accommodation groove S2 in which the upper protrusion 55 is accommodated may be defined in the lower protrusion 65. The upper projection accommodation groove S2 may have an opened top surface. When the upper protrusion 55 is inserted and fitted into the lower protrusion 65, the swivel top plate 5 may be connected to the swivel top bracket 6.

The lower protrusion 65 may be provided in a shape that protrudes downward on the bottom surface of the swivel top bracket 6. A lower accommodation groove S3 may be defined in the bottom surface of the lower protrusion 65 into which a bent portion 105 of the stopper plate 10 is inserted and accommodated. The lower accommodation groove S3 may have an opened bottom shape. The lower accommodation groove S3 may be a stopper plate accommodation groove in which an entire or portion of the stopper plate 10 is accommodated.

The lower protrusion 65 may be disposed in an inner area of the first gear 61.

The lower end 66 of the lower protrusion 65 may be in contact with the stopper plate 10.

The swivel bottom bracket 7 may have an opening 75 that surrounds the accommodation portion 85 of the swivel bottom plate 8. The opening 75 may be defined larger than the accommodation portion 85, and an entire or portion of the accommodation portion 85 may be accommodated in the opening 75. The opening 75 may be defined in an inner area of the second gear 71.

The swivel bottom bracket 7 may be provided with a swivel bottom plate accommodation portion 76 into which the swivel bottom plate 10 is inserted and accommodated.

The swivel bottom plate accommodation groove S4 into which the swivel bottom plate 10 is inserted and accommodated may be defined in an inner area of the swivel bottom plate accommodation portion 76. The swivel bottom plate accommodation groove S4 may have an opened bottom surface. The swivel bottom bracket 7 may surround a portion of the top surface and a circumferential surface of the swivel bottom plate 10.

A stopper portion through-hole 78 through which the stopper portion 82 passes may be defined in the swivel bottom bracket 7. The stopper through-hole 78 may be defined in an outer area of the second gear 71. The stopper portion through-hole 78 may be defined to pass through a rear portion of front and rear portions of the swivel bottom bracket 7 in the vertical direction Z.

The swivel bottom plate 8 may be provided with an accommodation portion 85 in which the stopper plate 10 is accommodated. An entire or portion of the stopper plate 10 may be inserted into and accommodated in the accommodation portion 85.

The accommodation portion 85 may be defined in a center of the swivel bottom plate 8.

The accommodation portion 85 may have a shape that is recessed upward.

The accommodation portion 85 may be inserted into the opening 75 of the swivel bottom bracket 7 and may be accommodated in the opening 75 of the swivel bottom bracket 7.

A through-hole 86 through which the lower protrusion 65 of the swivel top bracket 6 passes may be defined in the accommodation portion 85.

A space S5 in which the accommodation portion 85 is accommodated may be defined between the swivel top bracket 6 and the stopper plate 10.

The space S5 may be defined between the bottom surface of the swivel top placket 6 and the top surface of the stopper plate 10.

A portion of the accommodation portion 85 may be accommodated in the space S5, a portion of the accommodation portion 85 may be hooked downward on the lower plate 10, and the accommodation portion 85 may be maintained without being separated between the swivel top placket 6 and the stopper plate 10.

A first latch 88 is disposed on the swivel bottom plate 8 that is in contact with a first bent portion 114 and a second bent portion 116. The first latch 88 may be disposed in the accommodation portion 85 and may be provided to protrude upward. The first latch 88 may be a latch that are in contact with and hooked with the first bent portion 114 and the second bent portion 116 together. Each of the first bent portion 114 and the second bent portion 116 may be deformed in a direction that is away from each other by the first latch 88.

The stopper plate 10 may be provided with a bent portion 105 at the center thereof. The bent portion 105 may be bent to protrude upward from the stopper plate 10.

The stopper plate 10 may include a contact part 106 that are in contact with the lower end 66 of the lower protrusion 65. The contact part 105 may protrude upward from the contact part 106.

A second catch 108 that is in contact with one of the first bent portion 114 and the second bent portion 116 is disposed on the stopper plate 10. The second latch 108 may be provided to protrude upward from the contact part 106. The stopper plate 10 may be assembled so that the second latch 108 faces the first latch 88 in a horizontal direction. The second latch 108 may be a latch that is in contact with and hooked with the first bent portion 114 and the second bent portion 116 together.

An accommodation groove S6 may be defined in the bottom surface of the swivel top bracket 6 to accommodate an upper end of the first latch 88 and an upper end of the second latch 108.

(a) of FIG. 10 is a plan view before the spring is mounted, (b) of FIG. 10 is a plan view when the spring is mounted, (c) of FIG. 10 is a plan view when the spring is elastically deformed by the stopper plate, and (d) of FIG. 10 is a plan view when the spring is elastically restored.

The spring 11 includes a spring body 112, a first bent portion 114, and a second bent portion 116.

The spring body 112 may have an arc shape, as shown in (a) of FIG. 10, when no external force is applied to the first bent portion 114 and the second bent portion 116. An example of a spring body 112 may be a right arc shape.

The first bent portion 114 may be bent at one side of the spring body 112. The first bent portion 114 may be bent from one end of the spring body 112 toward the outside of the spring body 112.

The second bent portion 116 may be bent at the other side of the spring body 114. The second bent portion 116 may be bent from the other end of the spring body 112 toward the outside of the spring body 112.

The first bent portion 114 and the second bent portion 116 may be bent symmetrically.

When no external force is applied to the spring 11, the first bent portion 114 and the second bent portion 116 may be spaced apart from each other in a left and right direction, as shown in (a) of FIG. 10. If the first bent portion 114 is bent to the left direction, the second bent portion 116 may be bent to the right direction.

A spring space S7 in which the spring 11 is accommodated may be defined between the swivel top bracket 6 and the swivel bottom plate 8. The spring 11 may be accommodated between the bottom surface of the swivel top bracket 6 and the top surface of the accommodation portion 85, as shown in FIGS. 8 and 9.

Before the spring 11 is mounted between the bottom surface of the swivel top bracket 6 and the top surface of the accommodation portion 85, as shown in (b) of FIG. 10, one end of the spring body 112 and the other end of the spring body 112 may overlap each other, and the spring body 112 may be elastically deformed to have an overall ring shape. When the spring body 112 is elastically deformed, the first bent portion 114 and the second bent portion 116 may be exchanged in their left and right positions compared to before the elastic deformation. In this case, the first bent portion 114 may be a right-side bent portion, and the second bent portion 116 may be a left-side bent portion.

The first bent portion 114 and the second bent portion 116 may be supported on the swivel bottom plate 8 in the state in which the spring body 112 is elastically deformed. The first bent portion 114 and the second bent portion 116 may be hooked on the first latch 88 with the first latch 88 therebetween, as shown in FIG. 11. In this case, the second latch 108 may be disposed between the first bent portion 114 and the second bent portion 116.

When the first bent portion 114 and the second bent portion 116 are hooked to the first latch 88, arbitrary separation of the spring 11 may be restricted, and the spring 11 may be maintained at an upper side of the swivel bottom plate 8, particularly, the accommodation portion 85.

In the above state, the user may swivel the display set 1 around the vertical central axis, i.e., the bolt 12, and the swivel top plate 5, the swivel top bracket 6, and the stopper plate 10 connected by the bolt 12 and the nut 13 may rotate together.

When the stopper plate 10 rotates, the second latch 108 may push one of the first contact part 114 and the second contact part 116, as shown in FIG 12, and the spring 11 may be further elastically deformed, as shown in (C) of FIG. 10. In this case, a distance between the first bent portion 114 and the second bent portion 116 may be further apart from each other than before the rotation of the stopper plate 10.

Hereinafter, a swivel operation of the display device is described as follows.

The user or operator may place the swiveling mechanism 2 on the installation surface, and the elastic member 9 of the swiveling mechanism 2 may be in surface contact with the installation surface, and the movement of the display set 1 and the swiveling mechanism 2 may be restricted.

With the elastic member 9 placed on the installation surface, the user or operator may hold the display set 1 to swivel the display set 1 in a clockwise or counterclockwise direction, and the front of the display set 1 may face a front left side of the display set 1 or a front right side of the display set 1.

When the display set 1 is swiveled, the swivel top plate 5 coupled to the display set 1 and the swivel top bracket 6 coupled to the swivel top plate 5 may rotate. When the swivel top bracket 6 rotates, the first gear 61 may rotate around the bolt 12 along with the second gear 71 of the swivel bottom bracket 7, and the stopper plate 10 may rotate around the bolt 12.

When the stopper plate 10 rotates, the stopper plate 10 may push either the first bent portion 114 or the second bent portion 116 of the spring 11 in the rotational direction (clockwise or counterclockwise direction), and the spring body 112 of the spring 11 may be elastically deformed.

In this case, the spring 11 is not elastically restored by the load of the display set 1, the swivel top plate 5, the swivel top bracket 6, and the engagement of the first gear 61 and the second gear 71, and may be maintained in the elastically deformed state, as shown in (c) of FIG. 10.

That is, the user or operator may change a front angle of the display set 1 by a simple operation of swivel the display set 1.

The user or operator may hold the display set 1 to lift the display set 1 upward, and when the swiveling mechanism 2 is lifted from the installation surface, the swivel bottom bracket 7 may droop by its own weight together with the swivel bottom plate 8, as shown in FIG. 10, a portion of the accommodation portion 85 may be placed on the contact part 106 of the stopper plate 10, and the second gear 71 of the swivel bottom bracket 7 may be separated from the first gear 61 of the swivel top bracket 6. In this case, as shown in (d) of FIG. 10, the spring 11 may be elastically restored, and either the first bent portion 114 or the second bent portion 116 may allow the stopper plate 10 to reversely rotate to its original point (original position).

That is, the user or operator may allow the swiveling mechanism 2 to return to the original portion by the simple operation of holding the display set 1 to lift the display set 1 upward.

The above-disclosed subject matter is to be considered illustrative, and not restrictive.

## Claims

1. A display device comprising:
a display set (1); and
a swiveling mechanism (2) connected to the display set (1),
wherein the display set (1) comprises a display body (3) and a stand (4) connected to the display body (1), and
the swiveling mechanism (2) comprises:
a swivel top plate (5) coupled to the stand (4);
a swivel top bracket (6) disposed below the swivel top plate (5) and having a first gear (61);
a swivel bottom bracket (7) having a second gear (71) with which the first gear (61) is detachably engaged;
a swivel bottom plate (8) coupled to the swivel bottom bracket (7);
an elastic member (9) provided at a bottom surface of the swivel bottom plate (8) and placed on an installation surface;
a stopper plate (10) disposed on the bottom surface of the swivel bottom plate (8);
a bolt (12) passing through the swivel top plate (5), the swivel top bracket (6), and the stopper plate (10);
a nut (13) coupled to the bolt (12); and
a spring (11) supported by the swivel bottom plate (8) and disposed between the swivel bottom plate (8) and the swivel top bracket (6).
wherein the spring (11) comprises:
a spring body (112);
a first bent portion (114) bent at one side of the spring body (112); and
a second bent portion (116) bent at the other side of the spring body (112), and
**characterized by**
a first latch (88) that is in contact with the first bent portion (114) and the second bent portion (116) is provided on the swivel bottom plate (8), and
a second latch (108) that is in contact with one of the first bent portion (114) and the second bent portion (116) is provided on the stopper plate (10).

2. The display device according to claim 1, wherein the first gear (61) is disposed on a bottom surface of the swivel top bracket (6), and
the second gear (71) is disposed on a top surface of the swivel bottom bracket (7).

3. The display device according to claim 1 or 2, wherein a bolt through-hole (52 or 62 or 102) through which the bolt (12) passes is defined in each of the swivel top plate (5), the swivel top bracket (6), and the stopper plate (10).

4. The display device according to any one of claims 1 to 3, wherein an accommodation portion (85) in which the stopper plate (10) is accommodated is provided in the swivel bottom plate (8).

5. The display device according to claim 4, wherein a space (S5) in which the accommodation portion (85) is accommodated is defined between the swivel top bracket (6) and the stopper plate (10).

6. The display device according to claim 4, wherein, in the swivel bottom bracket (7), an opening (75) that surrounds the accommodation portion (85) is defined larger than the accommodation portion (85).

7. The display device according to any one of claims 1 to 6, wherein a spring space (S7) in which the spring (11) is accommodated is defined between the swivel top bracket (6) and the swivel bottom plate (8).

8. The display device according to one of claims 1 to 7, wherein the second latch (116) is disposed to face the first latch (88) in a horizontal direction.

9. The display device according to one of claims 1 to 8, wherein an accommodation groove (S6) in which an upper end of the first latch (88) and an upper end of the second latch (108) are accommodated is defined in a bottom surface of the swivel top bracket (6).

10. The display device according to any one of claims 1 to 9, wherein a swivel bottom plate accommodation portion (76) into which the swivel bottom plate (8) is inserted to be accommodated is defined in the swivel bottom bracket (7).

11. The display device according to any one of claims 1 to 10, wherein a stopper portion (82) protrudes from the swivel bottom plate (8), and
a stopper groove (54) hooked with the stopper portion (82) when the swivel top plate (5) rotates is defined in the swivel top plate (5).

12. The display device according to claim 11, wherein a stopper portion through-hole (78) through which the stopper portion (82) passes is defined in the swivel bottom bracket (7).

## Patentansprüche

1. Anzeigevorrichtung, umfassend:
ein Anzeigegerät (1); und
einen Schwenkmechanismus (2), der mit dem Anzeigegerät (1) verbunden ist,
wobei das Anzeigegerät (1) einen Anzeigekörper (3) und einen mit dem Anzeigekörper (1) verbundenen Ständer (4) umfasst, und
der Schwenkmechanismus (2) umfasst:
eine mit dem Ständer (4) verbundene obere Schwenkplatte (5);
eine unterhalb der obere Schwenkplatte (5) angeordnete obere Schwenkhalterung (6) mit einem ersten Zahnrad (61);
eine untere Schwenkhalterung (7) mit einem zweiten Zahnrad (71), mit dem das erste Zahnrad (61) lösbar in Eingriff steht;
eine untere Schwenkplatte (8), die mit der unteren Schwenkhalterung (7) verbunden ist;
ein elastisches Element (9), das an einer Unterseite der unteren Schwenkplatte (8) vorgesehen ist und auf einer Aufstellfläche angeordnet ist;
eine Anschlagplatte (10), die an der Unterseite der unteren Schwenkplatte (8) angeordnet ist;
einen Bolzen (12), der durch die obere Schwenkplatte (5), die obere Schwenkhalterung (6) und die Anschlagplatte (10) hindurchgeht;
eine mit dem Bolzen (12) verbundene Mutter (13); und
eine Feder (11), die von der unteren Schwenkplatte (8) getragen wird und zwischen der unteren Schwenkplatte (8) und der oberen Schwenkhalterung (6) angeordnet ist.
wobei die Feder (11) umfasst:
einen Federkörper (112);
einen ersten gebogenen Abschnitt (114), der an einer Seite des Federkörpers (112) gebogen ist; und
einen zweiten gebogenen Abschnitt (116), der an der anderen Seite des Federkörpers (112) gebogen ist, und
**gekennzeichnet durch**
einer ersten Verriegelung (88), die mit dem ersten gebogenen Abschnitt (114) in Kontakt steht und an der unteren Schwenkplatte (8) vorgesehen ist, und
eine zweite Verriegelung (108), die mit dem ersten gebogenen Abschnitt (114) oder dem zweiten gebogenen Abschnitt (116) in Kontakt steht, an der Anschlagplatte (10) vorgesehen ist.

2. Anzeigevorrichtung nach Anspruch 1, wobei das erste Zahnrad (61) an einer Unterseite der oberen Schwenkhalterung (6) angeordnet ist, und
das zweite Zahnrad (71) an einer Oberseite der unteren Schwenkhalterung (7) angeordnet ist.

3. Anzeigevorrichtung nach Anspruch 1 oder 2, wobei in der oberen Schwenkplatte (5), der oberen Schwenkhalterung (6) und der Anschlagplatte (10) jeweils ein Bolzendurchgangsloch (52 oder 62 oder 102) ausgebildet ist, durch das der Bolzen (12) hindurchgeht.

4. Anzeigevorrichtung nach einem der Ansprüche 1 bis 3, wobei in der unteren Schwenkplatte (8) ein Aufnahmeteil (85) vorgesehen ist, in dem die Anschlagplatte (10) aufgenommen ist.

5. Anzeigevorrichtung nach Anspruch 4, wobei zwischen der oberen Schwenkhalterung (6) und der Anschlagplatte (10) ein Raum (S5) definiert ist, in dem der Aufnahmeteil (85) untergebracht ist.

6. Anzeigevorrichtung nach Anspruch 4, wobei in der unteren Schwenkhalterung (7) eine Öffnung (75), die der Aufnahmeteil (85) umgibt, größer als der Aufnahmeteil (85) ausgebildet ist.

7. Anzeigevorrichtung nach einem der Ansprüche 1 bis 6, wobei zwischen der oberen Schwenkhalterung (6) und der unteren Schwenkplatte (8) ein Federraum (S7) definiert ist, in dem die Feder (11) untergebracht ist.

8. Anzeigevorrichtung nach einem der Ansprüche 1 bis 7, wobei die zweite Verriegelung (116) so angeordnet ist, dass sie der ersten Verriegelung (88) in horizontaler Richtung gegenüberliegt.

9. Anzeigevorrichtung nach einem der Ansprüche 1 bis 8, wobei in einer Unterseite der oberen Schwenkhalterung (6) eine Aufnahmerille (S6) definiert ist, in der ein oberes Ende der ersten Verriegelung (88) und ein oberes Ende der zweiten Verriegelung (108) aufgenommen sind.

10. Anzeigevorrichtung nach einem der Ansprüche 1 bis 9, wobei in der unteren Schwenkhalterung (7) ein Aufnahmeteil (76) für die schwenkbare Bodenplatte (8) ausgebildet ist, in den die untere Schwenkplatte (8) zum Aufnehmen eingesetzt ist.

11. Anzeigevorrichtung nach einem der Ansprüche 1 bis 10, wobei ein Anschlagteil (82) von der unteren Steinplatte (8) vorsteht und
in der oberen Schwenkplatte (5) eine Anschlagnut (54) ausgebildet ist, die bei einer Drehung der oberen Schwenkplatte (5) mit dem Anschlagteil (82) in Eingriff kommt.

12. Anzeigevorrichtung nach Anspruch 11, wobei in der unteren Schwenkhalterung (7) ein Durchgangsloch (78) für den Anschlagteil vorgesehen ist, durch das der Anschlagteil (82) hindurchragt.

## Revendications

1. Dispositif d'affichage, comprenant:
un ensemble d'affichage (1); et
un mécanisme pivotant (2) relié à l'ensemble d'affichage (1),
dans lequel l'ensemble d'affichage (1) comprend un corps d'affichage (3) et un support (4) relié au corps d'affichage (1), et
le mécanisme pivotant (2) comprend:
une plaque supérieure pivotante (5) reliée au support (4);
un support supérieur pivotant (6) situé sous la plaque supérieure pivotante (5) et comportant un premier engrenage (61);
un support inférieur pivotant (7) comportant un deuxième engrenage (71) avec lequel le premier engrenage (61) est en prise de manière amovible;
une plaque inférieure pivotante (8) reliée au support inférieur pivotant (7);
un élément élastique (9) disposé sur la face inférieure de la plaque inférieure pivotante (8) et posé sur une surface d'installation;
une plaque de butée (10) disposée sur la face inférieure de la plaque inférieure pivotante (8);
un boulon (12) traversant la plaque supérieure pivotante (5), le support supérieur pivotant (6) et la plaque de butée (10);
un écrou (13) vissé sur le boulon (12); et
un ressort (11) supporté par la plaque inférieure pivotante (8) et disposé entre la plaque inférieure pivotante (8) et le support supérieur pivotant (6),
dans lequel le ressort (11) comprend:
un corps de ressort (112);
une première partie coudée (114) formée d'un côté du corps de ressort (112); et
une deuxième partie coudée (116) formée de l'autre côté du corps de ressort (112); et
**caractérisé par**
un premier loquet (88), qui est en contact avec la première partie coudée (114) et la deuxième partie coudée (116), est disposé sur la plaque inférieure pivotante (8), et
un deuxième loquet (108), qui est en contact avec soit la première partie coudée (114), soit la deuxième partie coudée (116), est disposé sur la plaque de butée (10).

2. Dispositif d'affichage selon la revendication 1, dans lequel le premier engrenage (61) est disposé sur une face inférieure du support supérieur pivotant (6), et
le deuxième engrenage (71) est disposé sur la face supérieure du support inférieur pivotant (7).

3. Dispositif d'affichage selon la revendication 1 ou 2, dans lequel un trou traversant de boulon (52 ou 62 ou 102) que traverse le boulon (12) est formé dans la plaque supérieure pivotante (5), le support supérieur pivotant (6) et la plaque de butée (10).

4. Dispositif d'affichage selon l'une quelconque des revendications 1 à 3, dans lequel une partie de logement (85), dans laquelle est logée la plaque de butée (10), est disposée dans la plaque inférieure pivotante (8).

5. Dispositif d'affichage selon la revendication 4, dans lequel un espace (S5) dans lequel est logée la partie de logement (85) est délimité entre le support supérieur pivotant (6) et la plaque de butée (10).

6. Dispositif d'affichage selon la revendication 4, dans lequel, dans le support inférieur pivotant (7), une ouverture (75) qui entoure la partie de logement (85) est supérieure à la partie de logement (85).

7. Dispositif d'affichage selon l'une quelconque des revendications 1 à 6, dans lequel un espace de ressort (S7), dans lequel est logé le ressort (11), est délimité entre le support supérieur pivotant (6) et la plaque inférieure pivotante (8).

8. Dispositif d'affichage selon l'une des revendications 1 à 7, dans lequel le deuxième loquet (116) est disposé de manière à faire face au premier loquet (88) dans une direction horizontale.

9. Dispositif d'affichage selon l'une des revendications 1 à 8, dans lequel une rainure de logement (S6), dans laquelle sont logées l'extrémité supérieure du premier loquet (88) et l'extrémité supérieure du deuxième loquet (108), est pratiquée dans la face inférieure du support supérieur pivotant (6).

10. Dispositif d'affichage selon l'une quelconque des revendications 1 à 9, dans lequel une partie de logement (76) de la plaque inférieure pivotante, dans laquelle la plaque inférieure pivotante (8) est insérée pour y être logée, est délimitée dans le support inférieur pivotant (7).

11. Dispositif d'affichage selon l'une quelconque des revendications 1 à 10, dans lequel une partie butée (82) fait saillie de la plaque inférieure pivotante (8), et
une rainure de butée (54), dans laquelle s'insère la partie butée (82) lorsque la plaque supérieure pivotante (5) tourne, est pratiquée dans la plaque supérieure pivotante (5).

12. Dispositif d'affichage selon la revendication 11, dans lequel un trou traversant (78) dans la partie de butée, à travers lequel passe la partie butée (82), est délimité dans le support inférieur pivotant (7).
